# EUROPEAN PATENT SPECIFICATION

(11) **EP 3 817 932 B1**
(45) Date of publication and mention of the grant of the patent: **13.08.2025**
(21) Application number: 19734544.0
(22) Date of filing: 06.06.2019
(51) Int. Cl.: B60H 1/00, B60H 1/32, B65D 88/74, F25D 19/00, B60P 3/20

(54) **ISOLATED EVAPORATOR PIPING POD**
ISOLIERTER VERDAMPFERLEITUNGSBEHÄLTER
CAPSULE DE TUYAUTERIE D'ÉVAPORATEUR ISOLÉE

(30) Priority: 02.07.2018 US 201862693166 P
(43) Date of publication of application: 12.05.2021
(73) Proprietor: Carrier Corporation, Palm Beach Gardens, FL 33418 (US)
(72) Inventor: KONDRK, Jason R., New York 13221 (US)
(74) Representative: Dehns
(86) International application number: PCT/US2019/035832
(87) International publication number: WO 2020/009776

(56) References cited:
- WO-A1-2017/082044
- DE-U1- 202014 001 225
- US-A- 4 912 940
- US-A1- 2014 110 088

## Description

### BACKGROUND

The following description relates to a system comprising a pod assembly having an evaporator and, more specifically, to a system comprising an isolated evaporator piping pod for certain refrigerants, such as A2L refrigerants.

Regulations in various regions around the world are requiring that refrigerant suppliers reduce distributions of high global warming potential (GWP) refrigerants. This presents an issue, however, in that new blends of low GWP refrigerants, such as A2L refrigerants, are often characterized as being mildly flammable. Thus, if an A2L refrigerant, for example, leaks into a cargo container interior through evaporator tubing, the leaked A2L refrigerant can create a mildly flammable environment that could ignite if a sufficient energy source exists.

While the potential ignition of leaked, mildly flammable refrigerant can be addressed by various options, such as the provision of safety systems, doing so is costly and time consuming.

DE 20 2014 001225 U1 discloses a vehicle with a cargo space and a cooling device to cool the cargo area.

WO 2017/082044 A1 discloses a refrigeration unit that is mounted to shield an opening formed in a container box from the outside and cools the inside air.

### BRIEF DESCRIPTION

According to an aspect of the invention, a system is provided comprising a pod assembly and a fan, the pod assembly comprising an evaporator including evaporator tubes and return bend elements connecting corresponding evaporator tube ends. The pod assembly includes peripheral flanges which are attachable to a wall of a cargo area, a convex portion formed to define, with a portion of the wall, an interior to accommodate the evaporator tubes and the fan, the interior being fluidly communicative with the cargo area through an inlet and an outlet defined in the wall and the fan drives air flow from the inlet to the outlet and through the evaporator tubes and plate sections provided with multiple apertures, the plate sections being respectively secured to opposite end sections of the evaporator tubes and respective local portions of the peripheral flanges and the convex portion to isolate the return bend elements from the interior. The return bend elements are provided at the opposite end sections of the evaporator tubes. Respective outer planes of the plate sections are coplanar with respective outermost planes of the opposite end sections of the evaporator tubes. The multiple apertures sealably surround each of the evaporator tubes.

The return bend elements include return bends and brazed joints that connect the return bends to the corresponding ends of the two or more evaporator tubes.

In accordance with additional or alternative embodiments, the peripheral flanges form a polygonal profile and the convex portion includes rounded edges.

In accordance with additional or alternative embodiments, the interior includes a lower section defined between the inlet and the evaporator tubes, an upper section defined between the fan and the outlet and a central section defined between evaporator tubes and the fan.

In accordance with additional or alternative embodiments, the plate sections are respectively formed to define apertures through which the return bend elements are connectable with the corresponding evaporator tube ends.

In accordance with additional or alternative embodiments, the plate sections respectively define, with respective distal portions of the peripheral flanges and the convex portion, distal interiors isolated from the interior and the distal portions of the convex portion define apertures through which the distal interiors are communicative with an exterior of the cargo area.

In accordance with additional or alternative embodiments, the convex portion includes removable panels.

According to another aspect of the invention, a transport refrigeration unit (TRU) is provided and includes a wall defining an inlet and an outlet between a cargo area and an exterior, and a system as defined above. The pod assembly includes an evaporator, peripheral flanges attachable to the wall, a convex portion defining, with a portion of the wall, an interior communicative with the cargo area through the inlet and the outlet and configured to accommodate the evaporator and the fan that drives air flow from the inlet and to the outlet through the evaporator and plate sections respectively secured to opposite end sections of evaporator tubes of the evaporator and respective local portions of the peripheral flanges and the convex portion to divide the interior into a first interior configured to accommodate the evaporator tubes and the fan and second interiors isolated from the first interior and configured to accommodate return bend elements of the evaporator. The return bend elements are provided at the opposite end sections of the evaporator tubes. Respective outer planes of the plate sections are coplanar with and sealably surround respective outermost planes of the opposite end sections of the evaporator tubes.

The return bend elements include return bends and brazed joints that connect the return bends to corresponding ends of the two or more evaporator tubes.

In accordance with additional or alternative embodiments, the peripheral flanges form a polygonal profile and the convex portion comprises rounded edges.

In accordance with additional or alternative embodiments, a width of the first interior is equal to or slightly less than a width of the evaporator tubes.

In accordance with additional or alternative embodiments, the first interior includes a lower section defined between the inlet and the evaporator tubes, an upper section defined between the fan and the outlet and a central section defined between evaporator tubes and the fan.

In accordance with additional or alternative embodiments, the plate sections are respectively formed to define apertures through which the return bend elements are connectable with the corresponding evaporator tubes.

In accordance with additional or alternative embodiments, the distal portions of the convex portion define apertures through which the second interiors are communicative with an exterior of the cargo area.

In accordance with additional or alternative embodiments, the convex portion includes removable panels.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a trailer with a transport refrigeration unit (TRU) in accordance with embodiments;
FIG. 2 is a graphical depiction of flammability vs. charge loss for various refrigerants;
FIG. 3 is a perspective view of a conventional pod for an evaporator of a TRU;
FIG. 4 is a side view of the conventional pod of FIG. 3;
FIG. 5 is a side view of a pod with isolation plates in an operational condition in accordance with embodiments;
FIG. 6 is a front view of the pod including the isolation plates of FIG. 5 in accordance with embodiments;
FIG. 7 is a cutaway front view of the pod including the isolation plates of FIG. 5 in accordance with embodiments;
FIG. 8 is a side view of example plates of the pod of FIGS. 5 and 6;
FIG. 9 is a side view of plates of the pod of FIGS. 5 and 6 in accordance with embodiments;
FIG. 10 is a side view of a removable panel in accordance with embodiments;
FIG. 11 is a front view of a pod in accordance with alternative embodiments;
FIG. 12 is a side view of the pod of FIG. 11 in accordance with further alternative embodiments; and
FIG. 13 is a side view of the pod of FIG. 11 in accordance with further alternative embodiments.

These and other advantages and features will become more apparent from the following description taken in conjunction with the drawings.

### DETAILED DESCRIPTION

As will be described below, a pod is provided to isolate piping, valves, return bends and other brazed joints from exposure to the outdoor ambient section of a transport refrigeration unit. The pod includes an enclosure with covers so that if a leak occurs, the leaked fluid cannot be pulled into the air stream by the evaporator fan. A refrigerant and condensate drain would allow leaked fluid to flow out of the enclosed area to the outside of the cargo storage area.

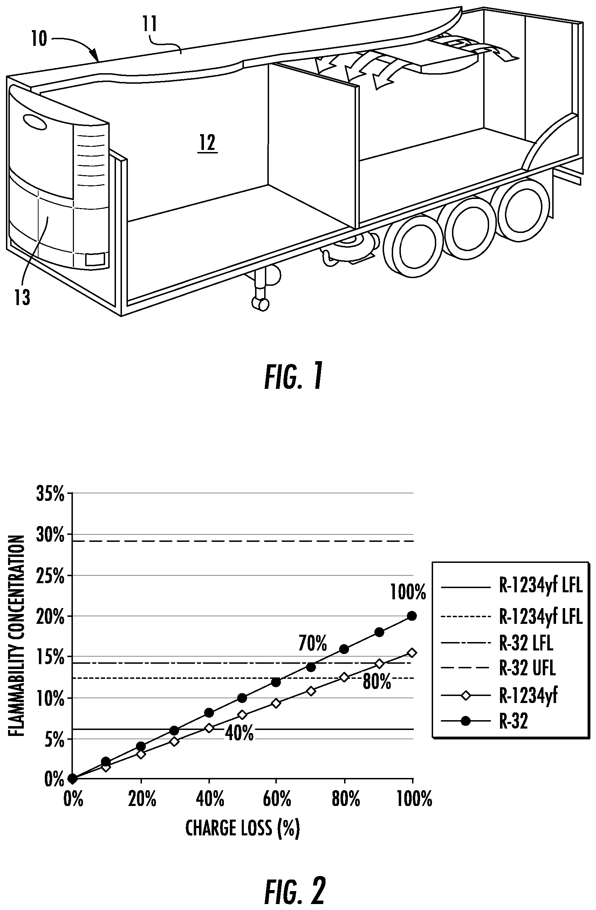

With reference to FIG. 1, a trailer 10 is provided and is attachable to a truck for transportation of various goods. The trailer 10 includes a body 11 that defines an interior or a cargo area 12 in which the various goods can be stowed during transportation. To an extent that these goods need to be kept in an air conditioned environment, such as where the goods include perishable items, the trailer 10 may further include a transport refrigeration unit (TRU) 13. The TRU 13 is attachable a portion of the body 11, such as a front of the body 11, and is configured to draw heated air in from the cargo area 12, to cool the heated air and to exhaust cooled air back into the cargo area 12. Within the TRU 13, the cooling is accomplished by flowing the heated air over and across evaporator tubing of an evaporator. The evaporator tubing is charged with refrigerant at a lower temperature than the heated air such that, as the heated air flows over and across the evaporator tubing, the refrigerant removes heat from the heated air.

While several different types of refrigerant can be used, some refrigerants tend to have relatively high GWP whereas others tend to have relatively low GWP and, as regulations change, the use of the relatively low GWP refrigerants is becoming increasingly required. This being the case, with reference to FIG. 2, it is seen that the relatively low GWP refrigerants tend to be more flammable than the relatively high GWP refrigerants. Therefore, where the relatively low GWP refrigerants are used in TRU applications, it is typically necessary to prevent leakage of the relatively low GWP refrigerants into the flows moving through the TRU 13 and/or into the cargo area 12.

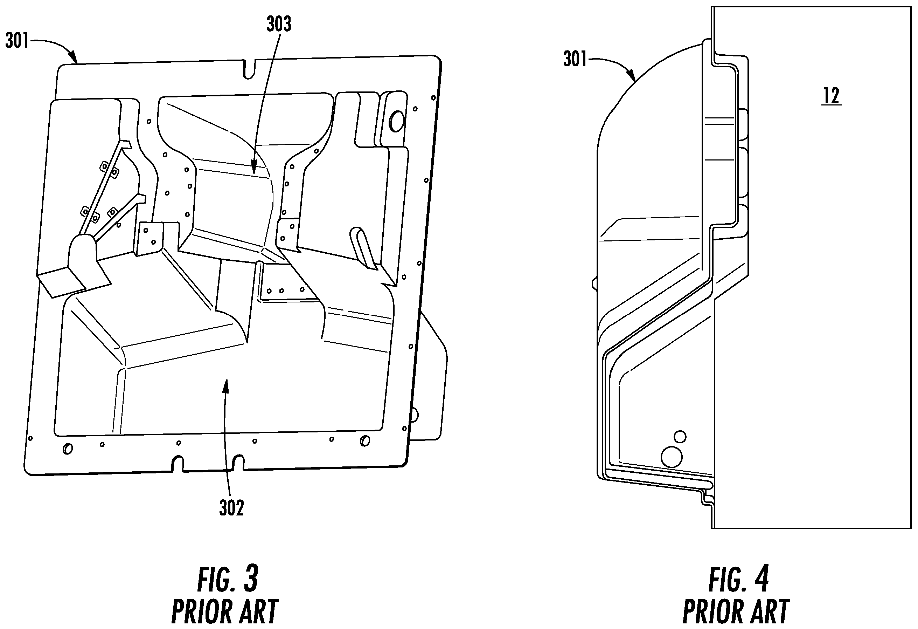

With continued reference to FIG. 1 and with additional reference to FIGS. 3 and 4, a conventional pod 301 can be provided for use with the TRU 13 to constrain and control flows of heated air from the cargo area 12 through the TRU 13 (see FIG. 1). The conventional pod 301 is attachable along its periphery to a wall of the cargo area 12 and has a convex portion that forms interior regions 302 and 303 that can respectively accommodate an evaporator of the TRU 13 and a fan that drives airflow from the cargo area 12, through an inlet defined in the wall, through the evaporator and back into the cargo area 12 through an outlet defined in the wall. As shown in FIG. 3, the interior region 302 in particular has sufficient room to accommodate an entirety of the evaporator, including the evaporator tubing and the return bend elements. The evaporator tubing is generally provided as substantially straight tubes that run across a substantial length of the evaporator. The return bend elements include return bends that connect corresponding ends of two or more evaporator tubes to one another and braze joints by which the return bends actually connect to the corresponding ends of the two or more evaporator tubes as well as additional piping and valves.

Refrigerant leaks from the evaporator tubing are uncommon, but refrigerant leaks from the return bend elements are a present issue. Thus, since the interior region 302 of the conventional pod 301 accommodates the return bend elements, leaks of refrigerant (i.e., mildly flammable, low GWP refrigerants) can occur and result in leaked refrigerant entering into the flows of air through the TRU 13 or into the cargo area 12 directly.

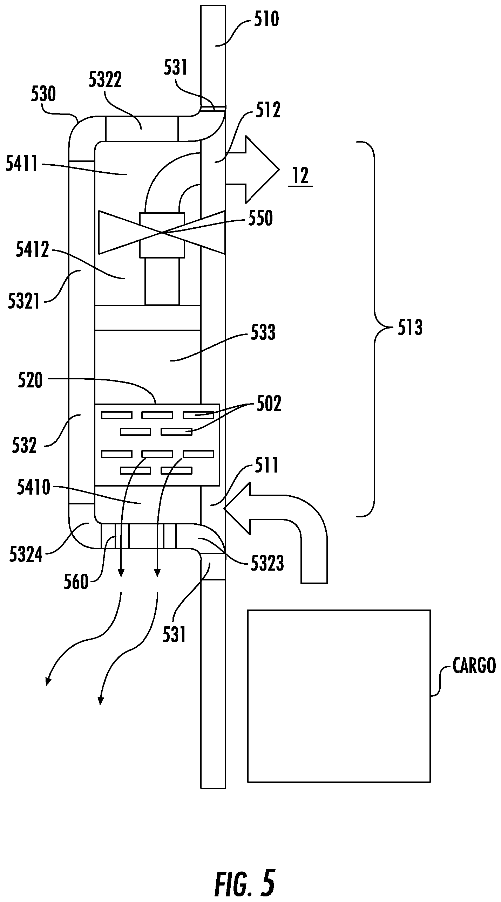

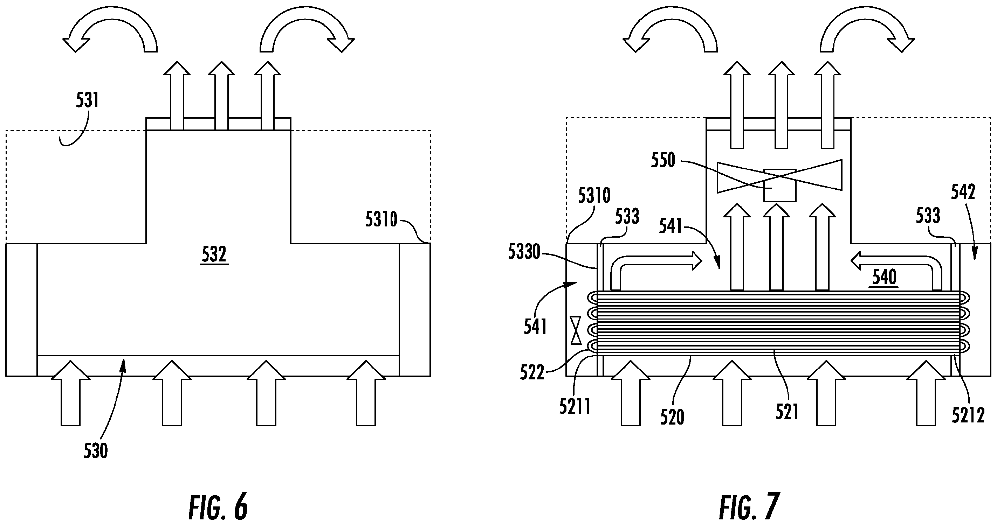

With reference to FIGS. 5-7, a transport refrigeration unit (TRU) 501 is provided and includes a cargo area wall 510 (i.e., for the cargo area 12 of FIG. 1), an evaporator 520 and a pod 530. The cargo area wall 510 is formed to define an inlet 511 and an outlet 512 that are each fluidly communicative with the cargo area 12. The evaporator 520 includes evaporator tubes 521 (see FIG. 7) and return bend elements 522. The evaporator tubes 521 are substantially straight and extend along a substantial length of the evaporator 520. The return bend elements 522 are provided at opposite end sections 5211 and 5212 of the evaporator tubes 521 and include return bends that fluidly connect corresponding ends of two or more evaporator tubes 521, brazed joints that actually connect the return bends to the evaporator tubes 521, feeder piping and valves.

The pod 530 includes peripheral flanges 531 that are attachable to the cargo area wall 510, a convex portion 532 and plate sections 533. The convex portion 532 is attached to the peripheral flanges 531 and is formed to define, with a corresponding portion 513 of the cargo area wall 510, an interior 540 (see FIG. 7). The interior 540 is communicative with the cargo area 12 through the inlet 511 and the outlet 512 and is configured and sized to accommodate the evaporator 520 and a fan 550. The fan 550 is operable to drive air flow from the inlet 511 and to the outlet 512 through the evaporator 520. The plate sections 533 are respectively secured to the opposite end sections 5211 and 5212 of the evaporator tubes 521 and to respective local portions of the peripheral flanges 531 and the convex portion 532. The plate sections 533 thus divide the interior 540 into a first interior 541 and second interiors 542.

The first interior 541 is configured and sized to accommodate the evaporator tubes 521 and the fan 550. Each of the second interiors 542 is isolated from a corresponding side of the first interior 541 and each of the second interiors 542 is sized and configured to accommodate the corresponding return bend elements 522 as well as the valves and other required piping to connect the evaporator 520 to the refrigeration system.

The plate sections 533 therefore effectively isolate the return bend elements 522 from the first interior 541. As such, leakage of refrigerant from the return bend elements 522 is prevented from flowing into the first interior 541 and from flowing into the cargo area 12 directly or indirectly.

In accordance with embodiments, the peripheral flanges 531 form a form a polygonal profile 5310 with a relatively wide, lower section that is configured and sized to surround the evaporator 520 and a relatively narrow, upper section that is configured and sized to surround the fan 550. As shown in FIG. 5, the convex portion 532 includes a forward body 5321, sidewalls 5322 extending from the peripheral flanges 531 to the forward body 5321, rounded edges 5323 at the peripheral flanges 531 and rounded edges 5324 at the forward body 5321. The sidewalls 5322 may be sized such that a width of the first interior 541 is equal to or slightly less than a width of the evaporator tubes 521.

As shown in FIG. 5, the first interior 541 includes a lower section 5410, an upper section 5411 and a central section 5412. The lower section 5410 is defined between the inlet 511 and the evaporator tubes 521. The upper section 5411 is defined between the fan 550 and the outlet 512. The central section 5412 is defined between the evaporator tubes 521 and the fan 550 and is fluidly interposed between the lower section 5410 and the upper section 5411.

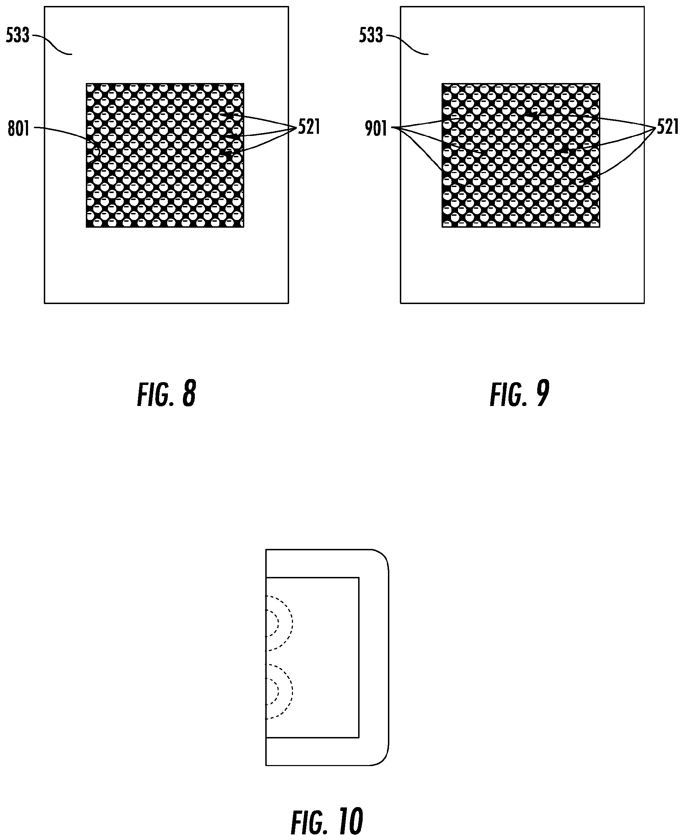

As shown in FIG. 7 and with additional reference to FIGS. 8 and 9, respective outer planes 5330 of the plate sections 533 are substantially coplanar with respective outermost planes of the opposite end sections 5211 and 5212 of the evaporator tubes 521. Thus, substantial entireties of the return bend elements 522 can be isolated from the first interior 541. The plate sections 533 are provided with multiple apertures 901 (see FIG. 9). The multiple apertures 901 sealably surround each individual evaporator tube 521 in an event the evaporator tubes 521 have interstitial spaces between them.

As shown in FIG. 5, distal portions of the convex portion 532 (i.e., the portions of the convex portion 532 that surround the second interiors 542) may be formed to define drain apertures 560. Leaked refrigerant flowing out of the return bend elements 522, which is isolated from the first interior 541 within each of the second interior 542 can flow out of the second interiors 542 and toward an exterior via the drain apertures 560.

With reference to FIG. 10, the convex portion 532 may include removable panels 1001 at various locations including locations at which the removable panels 1001 would provide access to the first interior 541 and locations at which the removable panels 1001 would provide access to the second interiors 542 and the return bend elements 522 (see FIG. 10).

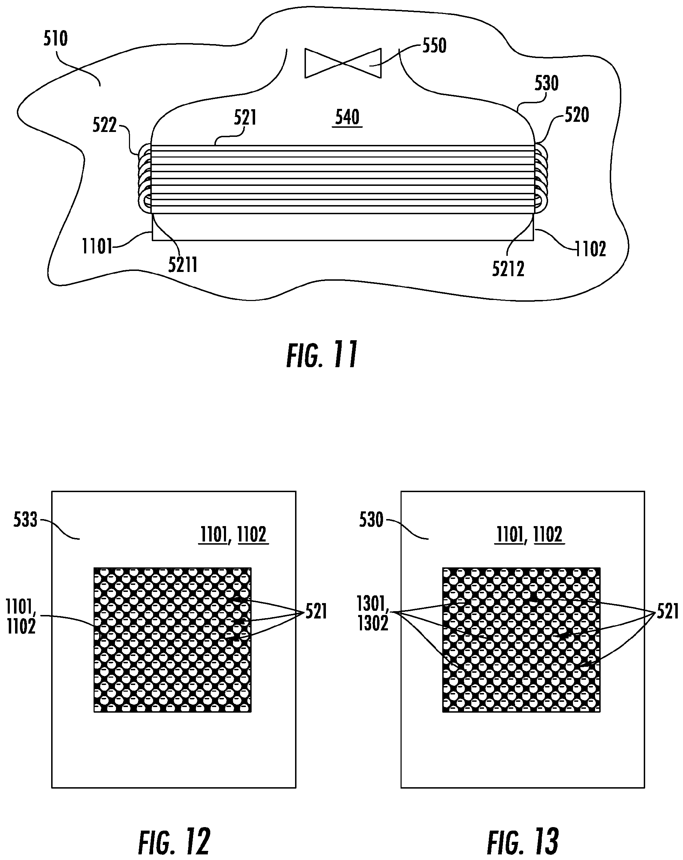

With reference to FIGS. 11-13, alternative embodiments of the pod 530 are provided in which the pod 530 itself is configured to isolate at least the return bend elements 522 from the interior 540. As shown in FIG. 11, the pod 530 is generally formed as described above to define, with the corresponding portion 513 (see FIG. 5) of the cargo area wall 510, the interior 540. The interior 540 is configured to accommodate the evaporator 520, the fan 550 and the air flow generated by the fan 550 through the evaporator 520. The opposite sides 1101, 1102 of the pod 530 are tapered around the opposite end sections 5211 and 5212 of the evaporator tubes 521 such that pod 530 itself is configured to isolate the return bend elements 522 from the interior 540.

In accordance with embodiments and, as shown in FIG. 12, the pod 530 is formed to define a first aperture 1201 and a second aperture 1202 (see FIG. 8 and the accompanying text for similar configurations). The end sections 5211 of the evaporator tubes 521 extend through the first aperture 1201 such that the return bend elements 522 associated with the end sections 5211 are isolated as a whole from the interior 540. The end sections 5212 of the evaporator tubes 521 extend through the second aperture 1202 such that the return bend elements 522 associated with the end sections 5212 are isolated as a whole from the interior 540.

In accordance with embodiments and, as shown in FIG. 13, the pod 530 is formed to define first apertures 1301 and second apertures 1302 (see FIG. 9 and the accompanying text for similar configurations). The return bend elements 522 associated with the end sections 5211 respectively extend through corresponding ones of the first apertures 1301 and are thus isolated on an individual basis from the interior 540. The return bend elements 522 associated with the end sections 5212 respectively extend through corresponding ones of the second apertures 1302 and are thus isolated on an individual basis from the interior 540.

Technical effects and benefits of the present invention are an elimination of a need for expensive ventilation and circulation systems that might otherwise be effectively required by regulations relating to mildly flammable, low GWP refrigerants. The pod described herein is designed such that no leak points are exposed inside a cargo box and may reduce potential false alarms, system shutdowns and loss of cargo events.

While the invention is provided in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the claims. Additionally, while various embodiments of the invention have been described, it is to be understood that the exemplary embodiment(s) may include only some of the described exemplary aspects. Accordingly, the invention is not to be seen as limited by the foregoing description, but is only limited by the scope of the appended claims.

## Claims

1. A system comprising a pod assembly and a fan (550), the pod assembly comprising:
an evaporator (520) comprising evaporator tubes (521) and return bend elements (522) connecting corresponding evaporator tube ends, the return bend elements (522) comprising return bends and brazed joints that connect the return bends to the corresponding ends of the two or more evaporator tubes (521);
peripheral flanges (531) which are attachable to a wall (510) of a cargo area (12);
a convex portion (532) formed to define, with a portion of the wall (510), an interior (540) accommodating the evaporator tubes (521) and the fan (550), the interior (540) being able to be fluidly communicative with the cargo area (12) through an inlet (511) and an outlet (512) defined in the wall (510), and the fan (550) being arranged to drive air flow from the inlet (511) to the outlet (512) and through the evaporator tubes (521); and
plate sections (533) provided with multiple apertures (901), the plate sections (533) being respectively secured to opposite end sections (5211, 5212) of the evaporator tubes (521), and respective local portions of the peripheral flanges (531) and the convex portion (532) to isolate the return bend elements (522) from the interior (540);
wherein respective outer planes (5330) of the plate sections (533) are coplanar with respective outermost planes of the opposite end sections (5211, 5212) of the evaporator tubes (521); and the multiple apertures (901) sealably surround each of the evaporator tubes (521); and
**characterised in that** the return bend elements (522) are provided at the opposite end sections (5211, 5212) of the evaporator tubes (521).

2. The system according to claim 1, wherein the peripheral flanges (531) form a polygonal profile (5310) and the convex portion (532) comprises rounded edges (5324).

3. The system according to claim 1 or 2, wherein the interior (540) comprises:
a lower section (5410) defined between the inlet (511) and the evaporator tubes (521);
an upper section (5411) defined between the fan (550) and the outlet (512); and
a central section (5412) defined between evaporator tubes (521) and the fan (550).

4. The system according to any preceding claim, wherein:
the plate sections (533) are respectively formed to define the apertures (901) through which the return bend elements (522) are connectable with the corresponding evaporator tube ends.

5. The system according to any preceding claim, wherein:
the plate sections (533) respectively define, with respective distal portions of the peripheral flanges (531) and the convex portion (532), distal interiors isolated from the interior (540), and
the distal portions of the convex portion (532) define apertures (560) through which the distal interiors are communicative with an exterior of the cargo area (12).

6. The system according to any preceding claim, wherein the convex portion (532) comprises removable panels (1001).

7. A transport refrigeration unit (501) comprising:
a wall (510) defining an inlet (511) and an outlet (512) between a cargo area (12) and an exterior; and
a system as claimed in any preceding claim.

8. The transport refrigeration unit (501) according to claim 7, wherein a width of a first interior (541) is equal to or slightly less than a width of the evaporator tubes (521).

## Patentansprüche

1. System, umfassend eine Behälterbaugruppe und ein Gebläse (550), wobei die Behälterbaugruppe Folgendes umfasst:
einen Verdampfer (520), der Verdampferrohre (521) und Rücklaufbogenelemente (522) umfasst, die entsprechende Verdampferrohrenden verbinden, wobei die Rücklaufbogenelemente (522) Rücklaufbögen und Lötverbindungen umfassen, welche die Rücklaufbögen mit den entsprechenden Enden der zwei oder mehr Verdampferrohre (521) verbinden;
Umfangsflansche (531), die an einer Wand (510) eines Frachtbereichs (12) angebracht werden können;
einen konvexen Abschnitt (532), der ausgebildet ist, um mit einem Abschnitt der Wand (510) einen Innenbereich (540) zu definieren, der die Verdampferrohre (521) und das Gebläse (550) aufnimmt, wobei der Innenbereich (540) über einen Einlass (511) und einen Auslass (512), die in der Wand (510) definiert sind, in Fluidverbindung mit dem Frachtbereich (12) stehen kann, und wobei das Gebläse (550) angeordnet ist, um einen Luftstrom von dem Einlass (511) zu dem Auslass (512) und durch die Verdampferrohre (521) zu treiben; und
Plattenteilabschnitte (533), die mit mehreren Öffnungen (901) versehen sind, wobei die Plattenteilabschnitte (533) jeweils an gegenüberliegenden Endteilabschnitten (5211, 5212) der Verdampferrohre (521) und jeweiligen lokalen Abschnitten der Umfangsflansche (531) und des konvexen Abschnitts (532) befestigt sind, um die Rücklaufbogenelemente (522) von dem Innenbereich (540) zu isolieren;
wobei jeweilige äußere Ebenen (5330) der Plattenteilabschnitte (533) koplanar mit jeweiligen äußersten Ebenen der gegenüberliegenden Endteilabschnitte (5211, 5212) der Verdampferrohre (521) sind; und die mehreren Öffnungen (901) jedes der Verdampferrohre (521) abdichtbar umgeben; und
**dadurch gekennzeichnet, dass** die Rücklaufbogenelemente (522) an den gegenüberliegenden Endteilabschnitten (5211, 5212) der Verdampferrohre (52) bereitgestellt sind.

2. System nach Anspruch 1, wobei die Umfangsflansche (531) ein polygonales Profil (5310) bilden und der konvexe Abschnitt (532) abgerundete Kanten (5324) umfasst.

3. System nach Anspruch 1 oder 2, wobei der Innenbereich (540) Folgendes umfasst:
einen unteren Teilabschnitt (5410), der zwischen dem Einlass (511) und den Verdampferrohren (521) definiert ist;
einen oberen Teilabschnitt (5411), der zwischen dem Gebläse (550) und dem Auslass (512) definiert ist; und
einen mittleren Abschnitt (5412), der zwischen den Verdampferrohren (521) und dem Gebläse (550) definiert ist.

4. System nach einem der vorhergehenden Ansprüche, wobei:
die Plattenteilabschnitte (533) jeweils ausgebildet sind, um die Öffnungen (901) zu definieren, durch welche die Rücklaufbogenelemente (522) mit den entsprechenden Verdampferrohrenden verbunden werden können.

5. System nach einem der vorhergehenden Ansprüche, wobei:
die Plattenteilabschnitte (533) mit den jeweiligen distalen Abschnitten der Umfangsflansche (531) und des konvexen Abschnitts (532) distale Innenbereiche definieren, die von dem Innenbereich (540) isoliert sind, und
die distalen Abschnitte des konvexen Abschnitts (532) Öffnungen (560) definieren, durch welche die distalen Innenbereiche mit einem Außenbereich des Frachtbereichs (12) in Verbindung stehen.

6. System nach einem der vorhergehenden Ansprüche, wobei der konvexe Abschnitt (532) abnehmbare Blenden (1001) umfasst.

7. Transportkühleinheit (501), umfassend:
eine Wand (510), die einen Einlass (511) und einen Auslass (512) zwischen einem Frachtbereich (12) und einem Außenbereich definiert; und
ein System nach einem der vorhergehenden Ansprüche.

8. Transportkühleinheit (501) nach Anspruch 7, wobei eine Breite eines ersten Innenbereichs (541) gleich einer Breite der Verdampferrohre (521) oder geringfügig kleiner ist als diese ist.

## Revendications

1. Système comprenant un ensemble nacelle et un ventilateur (550), l'ensemble nacelle comprenant :
un évaporateur (520) comprenant des tubes d'évaporateur (521) et des éléments de coude double (522) raccordant des extrémités de tube d'évaporateur correspondantes, les éléments de coude double (522) comprenant des coudes doubles et des joints brasés qui raccordent les coudes doubles aux extrémités correspondantes des deux ou plusieurs tubes d'évaporateur (521) ;
des rebords périphériques (531) qui peuvent être attachés à une paroi (510) d'une zone de chargement (12) ;
une partie convexe (532) formée de sorte à définir, avec une partie de la paroi (510), un intérieur (540) logeant les tubes d'évaporateur (521) et le ventilateur (550), l'intérieur (540) pouvant être en communication fluidique avec la zone de chargement (12) à travers une entrée (511) et une sortie (512) définies dans la paroi (510), et le ventilateur (550) étant conçu pour entraîner un écoulement d'air de l'entrée (511) vers la sortie (512) et à travers les tubes d'évaporateur (521) ; et
des sections de plaque (533) pourvues de multiples ouvertures (901), les sections de plaque (533) étant respectivement fixées à des sections d'extrémité opposées (5211, 5212) des tubes d'évaporateur (521), et à des parties locales respectives des rebords périphériques (531) et de la partie convexe (532) afin d'isoler les éléments de coude double (522) de l'intérieur (540) ;
dans lequel des plans extérieurs (5330) respectifs des sections de plaque (533) sont coplanaires avec des plans les plus extérieurs respectifs des sections d'extrémité opposées (5211, 5212) des tubes d'évaporateur (521) ; et les multiples ouvertures (901) entourent de manière étanche chacun des tubes d'évaporateur (521) ; et
**caractérisé en ce que** les éléments de coude double (522) sont prévus au niveau des sections d'extrémité opposées (5211, 5212) des tubes d'évaporateur (52).

2. Système selon la revendication 1, dans lequel les rebords périphériques (531) forment un profil polygonal (5310) et la partie convexe (532) comprend des bords arrondis (5324).

3. Système selon la revendication 1 ou 2, dans lequel l'intérieur (540) comprend :
une section inférieure (5410) définie entre l'entrée (511) et les tubes d'évaporateur (521) ;
une section supérieure (5411) définie entre le ventilateur (550) et la sortie (512) ; et
une section centrale (5412) définie entre les tubes d'évaporateur (521) et le ventilateur (550).

4. Système selon une quelconque revendication précédente, dans lequel :
les sections de plaque (533) sont respectivement formées de sorte à définir les ouvertures (901) à travers lesquelles les éléments de coude double (522) peuvent être raccordés aux extrémités de tube d'évaporateur correspondantes.

5. Système selon une quelconque revendication précédente, dans lequel :
les sections de plaque (533) définissent respectivement, avec des parties distales respectives des rebords périphériques (531) et de la partie convexe (532), des intérieurs distaux isolés de l'intérieur (540), et
les parties distales de la partie convexe (532) définissent des ouvertures (560) à travers lesquelles les intérieurs distaux sont en communication avec un extérieur de la zone de chargement (12).

6. Système selon une quelconque revendication précédente, dans lequel la partie convexe (532) comprend des panneaux amovibles (1001).

7. Unité en réfrigération dans les transports (501) comprenant :
une paroi (510) définissant une entrée (511) et une sortie (512) entre une zone de chargement (12) et un extérieur ; et
un système selon une quelconque revendication précédente.

8. Unité en réfrigération dans les transports (501) selon la revendication 7, dans laquelle une largeur d'un premier intérieur (541) est égale ou légèrement inférieure à une largeur des tubes d'évaporateur (521).
